# EUROPEAN PATENT APPLICATION

(11) **EP 0 982 363 A1**
(43) Date of publication of application: **01.03.2000**
(21) Application number: 98919562.3
(22) Date of filing: 12.05.1998
(51) Int. Cl.: C08L 33/12, C08F 2/44, C04B 26/06, B29C 45/00, B29K 33/04

(54) **(METH)ACRYLIC RESIN COMPOSITION FOR THERMOSET INJECTION MOLDING, PROCESS FOR THE PREPARATION OF THE COMPOSITION, AND PROCESS FOR THE PRODUCTION OF MOLDINGS OF (METH)ACRYLIC RESINS**

(30) Priority: 14.05.1997 JP 12420397
(71) Applicant: MITSUBISHI RAYON CO., LTD., Tokyo 104-8350 (JP)
(72) Inventor: KOYANAGI, Seiya Mitsubishi Rayon Co.,Ltd., Nagoya-shi Aichi 461-8677 (JP); KISHIMOTO, Yuichiro Mitsubishi Rayon Co., Ltd., Nagoya-shi Aichi 461-8677 (JP); YANASE, Akitada Toyohashi Plants Mitsubishi Rayon, Toyohashi-shi Aichi 440-8601 (JP); KAZEHAYA, Yuuji Toyohashi Plants Mitsubishi Rayon, Toyohashi-shi Aichi 440-8601 (JP)
(74) Representative: TER MEER STEINMEISTER & PARTNER GbR
(86) International application number: JP9802088
(87) International publication number: WO9851743

(57) **Abstract**

There are provided a (meth)acrylic resin composition for thermosetting type injection molding comprising a (meth)acrylic monomer (a), a (meth)acrylic polymer (b) and an inorganic filler (c), wherein the spiral flow length is in the range from 400 to 1600 mm; a method for producing the above-described (meth)acrylic resin composition which is BMC, wherein a part or all of the component (b) is used as a thickening agent; and a method for producing a (meth)acrylic resin molded article, wherein a (meth)acrylic resin composition comprising the component (a), component (b) and component (c) is subjected to thermosetting type injection molding. These are useful for producing a (meth)acrylic resin molded article excellent in properties such as appearance, heat resistance, hot water resistance, chemical resistance, dimension stability and damping property.

## Description

### TECHNICAL FIELD

The present invention relates to a (meth)acrylic resin composition for producing with high productivity a (meth)acrylic resin molded article having excellent appearance, dimension stability, damping property and the like, a method for producing the composition, and a method for producing a (meth)acrylic resin molded article having high productivity using the (meth)acrylic resin composition.

### BACKGROUND ART

A (meth)acrylic resin molded article consisting of a (meth)acrylic resin compounded with an inorganic filler such as aluminum hydroxide, has various prominent functions and properties such as excellent appearance of the molded article, warm feeling and weatherability. It is widely used in the form of artificial marble for counters such as a kitchen counter, washing and dressing stands, waterproof pans, and other architectural uses. Further, the (meth)acrylic resin molded article is also widely used as a damping material for precise apparatuses, sound instruments, image apparatuses, music instruments and the like since the molded article has excellent attenuation property on vibration.

For example, JP-A (Japanese Patent Application Laid-Open) No. 7-146683 discloses a method for obtaining an audiovisual instrument by a casting method in which the audiovisual instrument is equipped with a damping member comprising 20 to 50% by weight of a resin containing methyl methacrylate as a main constituent unit and 50 to 80% by weight of an inorganic filler composed of a hydroxide.

Further, JP-A No. 9-67497 discloses a method for obtaining an artificial marble wherein a (meth)acrylic resin composition consisting of a partially cross-linked gel polymer, a (meth)acrylic syrup and an inorganic filler is extruded at room temperature using an injection molding machine, then, this extruded material is press-molded.

Furthermore, JP-A Nos. 2-170847 and 6-93161 disclose a method for obtaining a molded article having grain pattern wherein a (meth)acrylic resin composition consisting only of a (meth)acrylic thermoplastic polymer and 10% by weight or less of an inorganic filler is molded by thermoplastic type injection molding.

However, the casting method disclosed in JP-A No. 7-146683 has a defect that productivity is low since it needs a long period of time for molding.

The method disclosed in JP-A No. 9-67497 is conducted by using an injection molding machine. However, by the injection molding machine, the (meth)acrylic resin composition is only extruded at room temperature. It is conducted by press-molding to mold the material, so that the productivity is extremely low.

The composition disclosed in JP-A Nos. 2-170847 and 6-93161 has an inorganic filler content of 10% by weight or less, therefore, the resulted molded article has no opacity feeling like marble, and the appearance thereof is not good. Further, since the inorganic filler content is 10% by weight or less, the resulted molded article is also poor in attenuation property on vibration and can not be used as a damping member. Even if the inorganic filler content is increased for improving these points, the melt viscosity of the composition increases and the flowability deteriorates, and consequently it becomes impossible to injection-mold the composition. Further, the composition has defects that properties of the molded article such as heat resistance, hot water resistance, chemical resistance and dimension stability are inferior since a thermoplastic resin is used as the material.

### DISCLOSURE OF INVENTION

An object of the present invention is provide a (meth)acrylic resin composition which is a raw material of a (meth)acrylic resin molded article excellent in properties such as appearance, heat resistance, hot water resistance, chemical resistance, dimension stability and damping property, a method for producing the composition, and a method for producing a (meth)acrylic resin molded article having high productivity using the (meth)acrylic resin composition.

The present inventors have intensively studied for attaining the above-described object, and as a result, have found that excellent effects can be obtained by subjecting a specific (meth)acrylic resin composition (preferably, the composition exhibiting a spiral flow length within specific range) to thermosetting type injection molding, and completed the present invention.

Namely, the present invention relates to a (meth)acrylic resin composition for thermosetting type injection molding comprising a (meth)acrylic monomer (a), (meth)acrylic polymer (b) and inorganic filler (c), wherein the spiral flow length is in the range from 400 to 1600 mm.

The present invention further relates to a method for producing the above-described (meth)acrylic resin composition which is a BMC (Bulk Molding Compound) in which a part or all of the component (b) is used as a thickening agent; and a method for producing a (meth)acrylic resin molded article, wherein a (meth)acrylic resin composition comprising a (meth)acrylic monomer (a), a (meth)acrylic polymer (b) and an inorganic filler (c) is subjected to thermosetting type injection molding.

In the present invention, "(meth)acrylic" means "methacrylic and/or acrylic".

In the present invention, by subjecting the specific (meth)acrylic resin composition (preferably, the composition exhibiting a spiral flow length within specific range) to thermosetting type injection molding, it becomes possible to produce a (meth)acrylic resin molded article excellent in appearance and dimension stability with extremely high productivity. Therefore, the present invention is extremely useful in industry.

### BRIEF DESCRIPTION OF DRAWINGS

Fig. 1 shows the shape of a spiral groove of a mold used in the present invention for measuring the spiral flow length.
Fig. 2 is a X-X line sectional view of the spiral groove shown in Fig. 1.
Fig. 3 schematically shows the cross-section at a mold-used in the present invention for measuring the spiral flow length.
Fig. 4 schematically shows the appearance of a mold used in the present invention for measuring the spiral flow length.

### BEST MODE FOR CARRYING OUT THE INVENTION

The (meth)acrylic monomer (a) constituting the (meth)acrylic resin composition of the present invention acts to give suitable flowability to the composition when it is subjected to thermosetting type injection molding. The content of the component (a) is not particularly restricted. However, taking workability in conducting thermosetting type injection molding and physical properties of the resulted (meth)acrylic resin molded article such as mechanical strength into consideration, it is preferable that the component (a) is contained in the (meth)acrylic resin composition in an amount of from 5 to 50% by weight. When this content is 5% by weight or more, the viscosity of the (meth)acrylic resin composition decreases and the handling thereof tends to be excellent. When this content is not more than 50% by weight, the shrinkage coefficient in curing tends to decrease. This content is preferred in the range from 10 to 40% by weight, and particularly preferred in the range from 15 to 30% by weight.

Examples of the (meth)acrylic monomer used in the component (a) include monofunctional monomers such as an alkyl (meth)acrylate carrying an alkyl group having 1 to 20 carbon atoms, cyclohexyl (meth)acrylate, glycidyl (meth)acrylate, isobornyl (meth)acrylate, tricyclodecanyl (meth)acrylate, glycidyl (meth)acrylate, hydroxyalkyl (meth)acrylate, benzyl (meth)acrylate, tetrahydrofurfuryl (meth)acrylate, 2,2,2-trifluoroethyl (meth) acrylate, (meth)acrylic acid, metal (meth)acrylate and (meth)acrylic acid amide; polyfunctional monomers such as ethylene glycol di(meth)acrylate, propylene glycol di(meth)acrylate, 1,3-butylene glycol di(meth)acrylate, 1,4-butylene glycol di(meth)acrylate, 1,6-hexane diol di(meth)acrylate, dimethylolethane di(meth)acrylate, 1,1-dimethylolpropane di(meth)acrylate, 2,2-dimethylolpropane di(meth)acrylate, trimethylolethane tri(meth)acrylate, trimethylolpropane tri(meth)acrylate, tetramethylolmethane tri(meth)acrylate, tetramethylolmethane di(meth)acrylate, neopentyl glycol di(meth)acrylate and polyvalent esters of (meth)acrylic acid with polyhydric alcohol [polyethylene glycol, polypropylene glycol, pentaerythritol, dipentaerythritol and the like]; and so on. These can be used alone or in combination of two or more.

Among them, it is preferable that methyl methacrylate is included in the component (a) since the appearance of the resulted molded article tends to be improved. The content of methyl methacrylate is not particularly restricted. However, it is preferred in the range from 1 to 20% by weight in the (meth)acrylic resin composition. The more preferable content is in the range from 5 to 15% by weight.

The (meth)acrylic resin composition of the present invention can optionally contain a monomer other than the component (a), namely other than the (meth)acrylic monomer. Examples of this monomer include aromatic vinyls such as styrene and divinylbenzene, vinyl acetate, (meth)acrylonitrile, vinyl chloride, maleic anhydride, maleic acid, maleate, fumaric acid, fumarate and the like.

For endowing excellent mechanical strength, solvent resistance, heat resistance, hot water resistance, dimension stability and the like to the (meth)acrylic resin molded article obtained by thermosetting type injection molding of the (meth)acrylic resin composition of the present invention, it is preferable that a polyfunctional monomer is contained in the component (a). The amount used of the polyfunctional monomer is not particularly restricted, however, it is preferred in the range from 3 to 80% by weight in the component (a) for effectively obtaining the above-described advantage.

Particularly, it is preferable to use neopentyl glycol dimethacrylate as the polyfunctional monomer since a molded article having very excellent gloss of the surface tends to be obtained. In this case, neopentyl glycol dimethacrylate may be used together with the other polyfunctional monomers.

The (meth)acrylic polymer (b) constituting the (meth)acrylic resin composition of the present invention acts to suppress the occurrence of dimples in injection-molding the (meth)acrylic resin composition and to give suitable mechanical strength to the resulted molded article. This (meth)acrylic polymer (b) is a polymer obtained by polymerization using a (meth)acrylic monomer as a main component. As a constituent component (monomer for polymerization) used for obtaining the (meth)acrylic polymer (b), for example, various monomers as exemplified for the component (a) previously can be used. These constituent components may be used alone to obtain a homopolymer, or used in combination of two or more to obtain a copolymer, and further, may be copolymerized with a polyfunctional monomer. As the component (b), two or more (meth)acrylic polymers having different compositions and/or weight average molecular weights may be used together.

The component (b) may be a cross-linked polymer, non-cross-linked polymer or core-shell type polymer, and may be suitably selected according to demands. When the flowability of the (meth)acrylic resin composition and the mechanical strength of the molded article are took into consideration, the weight average molecular weight of the component (b) is preferably in the range from 20,000 to 2,000,000. Particularly, it is more preferable that the weight average molecular weight is in the range from 50,000 to 400,000 since then the occurrence of dimples in injection-molding the (meth)acrylic resin composition tends to be suppressed.

The content of the component (b) is not particularly restricted. However, it is preferable in the range from 1 to 30% by weight in the (meth)acrylic resin composition. Particularly, it is preferable to determine appropriate content according to the average molecular weight of the component (b) to put the spiral flow length of the (meth)acrylic resin composition into the range from 400 to 1600 mm.

Specifically, if balance between the workability in injection-molding and the physical properties such as mechanical strength of the resulted resin molded article is took into consideration, for example, the content of the component (b) is preferably within the range from 5 to 30% by weight in the (meth)acrylic resin composition when the weight average molecular weight of the component (b) is not less than 20,000 and less than 50,000.

When the weight average molecular weight of the component (b) is not less than 50,000 and not more than 400,000, the content of the component (b) is preferably within the range from 2 to 20% by weight in the (meth)acrylic resin composition.

Further, when the weight average molecular weight of the component (b) is more than 400,000 and not more than 2,000,000, the content of the component (b) is preferably within the range from 1 to 15% by weight in the (meth)acrylic resin composition.

The component (b) can be produced by a known polymerization method such as solution polymerization method, bulk polymerization method, emulsion polymerization method and suspension polymerization, method.

The inorganic filler (c) constituting the (meth)acrylic resin composition of the present invention acts to give excellent texture as artificial marble, heat resistance, damping property and the like to the resulted molded article. The content of the component (c) is not particularly restricted. However, it is preferably in the range from 20 to 80% by weight in the (meth)acrylic resin composition. When this content is 20% by weight or more, the texture, heat resistance damping property and other properties of the resulted molded article tend to be improved. When this content is 80% by weight or less, a molded article having high mechanical strength tends to be obtained. This content is more preferred in the range from 30 to 70% by weight and particularly preferred from 35 to 65% by weight.

The average particle size of the component (c) is not particularly restricted. However, it is preferably within the range of not less than 1 µm and not more than 90 µm for giving excellent gloss and transparency to the resulted molded article. When this average particle size is approximately not less than 1 µm and less than 20 µm, the resulted molded article tends to be endowed with excellent gloss. When this average particle size is approximately more than 60 µm and not more than 90 µm, the resulted molded article tends to be endowed with excellent transparency.

Further, the average particle size of the component (c) is more preferably in the range of not less than 20 µm and not more than 60 µm. When the average particle size is within this range, the resulted molded article tends to be endowed with excellent gloss and transparency, and at the same time, the injection moldability of the (meth)acrylic resin composition tends to be improved and the whitening of the molded article tends not to occur.

As the component (c), for example, an inorganic filler such as aluminum hydroxide, silica, amorphous silica, calcium carbonate, barium sulfate, titanium oxide, calcium phosphate, talc, clay and glass powder can be suitably used according to demands. Especially, when the molded article is endowed with granite-like appearance, aluminum hydroxide, silica, amorphous silica and glass powder are preferable as the component (c).

Further, a granite-like (meth)acrylic resin molded article having grain pattern can be obtained by further compounding the inorganic filler-containing resin particle (d) into the (meth)acrylic resin composition of the present invention and by molding the resulted mixture. The amount compounded of the inorganic filler-containing resin particle (d) is not particularly restricted. However, it is preferably in the range from 1 to 50% by weight in the (meth)acrylic resin composition. When this amount compounded is 1% by weight or more, grain pattern having excellent design tends to be formed. Then this amount compounded is 50% by weight or less, kneading property in producing the (meth)acrylic resin composition tends to be unproved. This amount compounded is mere preferably in the range from 5 to 30% by weight. When the (meth)acrylic resin composition contains the inorganic filler-containing resin particle (d), the content of an inorganic filler as the component (c) is preferably in the range from 20 to 70% by weight.

The resin constituting the inorganic filler-containing resin particle (d) may be any resin provided it is not dissolved in the (meth) acrylic monomer (a), and for example, a cross-linked (meth)acrylic resin, cross-linked polyester resin, cross-linked styrene resin and the like can be listed. The cross-linked (meth)acrylic resin is preferable, since it has excellent affinity with the (meth)acrylic resin composition of the present invention, and a molded article having beautiful appearance is obtained. This cross-linked (meth)acrylic resin may also comprise polymethyl (meth)acrylate or noncross-linked (meth)acrylic polymer containing methyl (meth)acrylate as a main component.

The inorganic filler constituting the inorganic filler-containing resin particle (d) is preferably used in an amount within the range from 20 to 80% by weight in the inorganic filler-containing resin particle (d). When this amount used is 20% by weight or more, the texture and heat resistance of the resulted molded article tend to be improved. When this amount used is not more than 80% by weight, a molded article having high mechanical strength tends to be obtained.

As this inorganic filler, for example, aluminum hydroxide, silica, amorphous silica, calcium carbonate, barium sulfate, titanium oxide, calcium phosphate, talc, clay, glass powder and the like can optionally be used appropriately. Particularly, when granite-like artificial marble is produced, aluminum hydroxide, silica, amorphous silica and glass powder are preferred as the inorganic filler.

The method for producing the inorganic filler-containing resin particle (d) is not particularly restricted. For example, there is listed a method in which a resin molded article containing an inorganic filler obtained via polymerization and curing (e.g. heat press method and casting method) is ground and classified through a sieve. Specifically, an inorganic filler-containing resin particle obtained by grinding and classifying (meth)acrylic artificial marble is preferred.

In the present invention, it is possible to use one inorganic filler-containing resin particle (d) or two or more inorganic filler-containing resin particles (d) having different colors and particle sizes. The particle size of the inorganic filler-containing resin particle (d) is not particularly restricted provided it is not more than the thickness of the resulting molded article.

Into the (meth)acrylic resin composition of the present invention, various additives can be optionally added. The additives include curing agents such as organic peroxides and azo compounds that are for example benzoyl peroxide, lauryl peroxide, t-butylhydro peroxide, cyclohexanone peroxide, methyl ethyl ketone peroxide, t-butyl peroxy octoate, t-butyl peroxy benzoate, dicumyl peroxide, 1,1-bis(t-butyl peroxy)3,3,5-trimethylcyclohexane, azobisisobutyronitrile and the like; reinforcing materials such as glass fibers and carbon fibers; thickening agents such as magnesium oxide; coloring agents; low profile agents; internal releasing agents; and the like.

The (meth)acrylic resin composition of the present invention is required to be composed of the above-described components and to have a spiral flow length in the range from 400 to 1600 mm.

This spiral flow length is one of general indexes for evaluating flowability of a resin composition in a mold, and is measured by using a mold having a spiral groove.

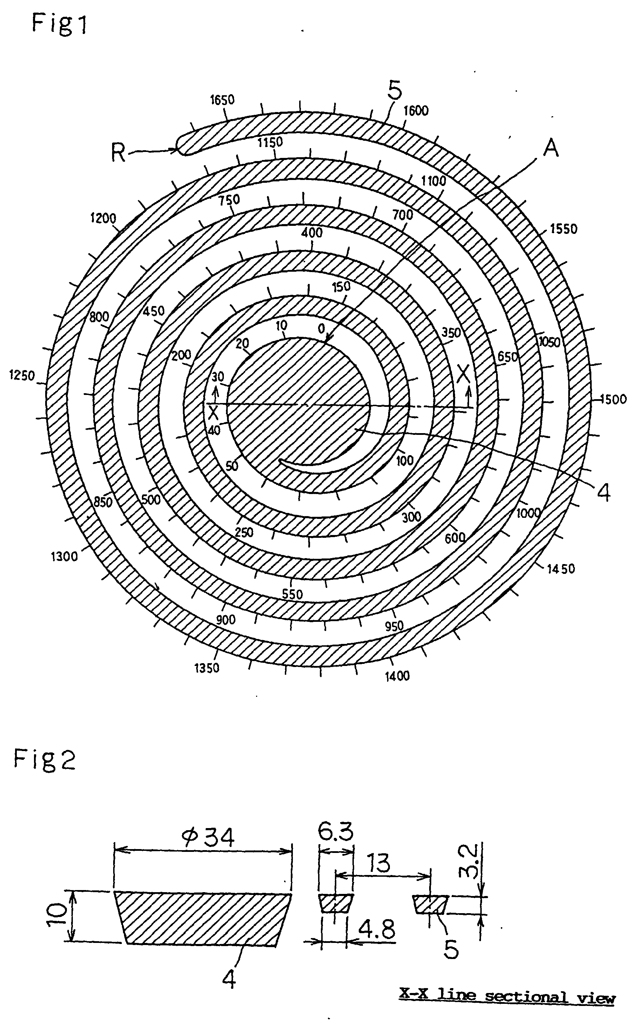

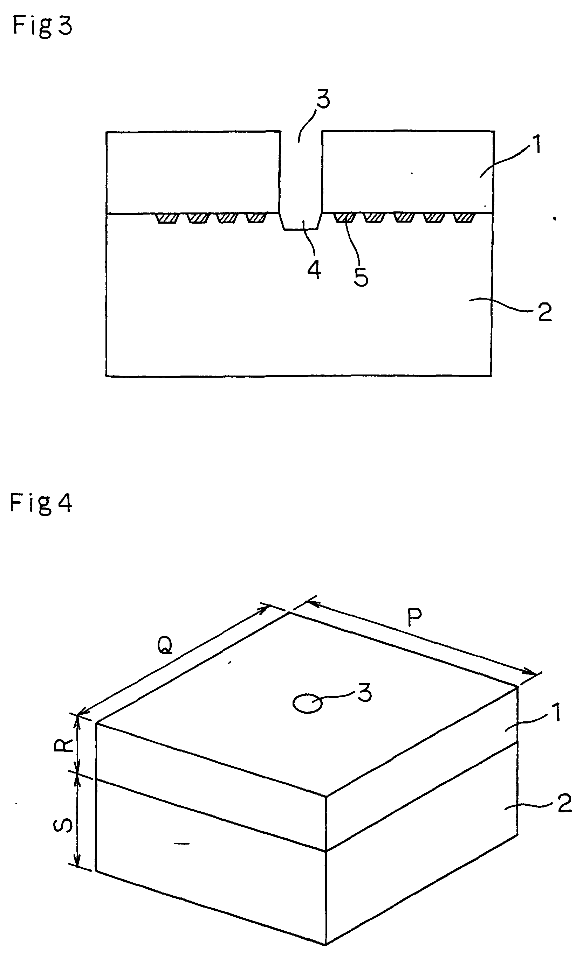

Fig. 1 shows the shape of the spiral groove of the mold used in the present invention for measuring the spiral flow length, and Fig. 2 is a X-X line sectional view of the spiral groove shown in Fig. 1. Furthermore, Fig. 3 schematically shows the cross-section of the mold used for measuring the spiral flow length, and Fig. 4 schematically shows the appearance of the mold used for measuring the spiral flow length. The specific measuring conditions of the spiral flow length in the present invention are in accordance with that in examples described later.

When the (meth)acrylic resin composition is subjected to compression molding according to a conventional method, the spiral flow length of the composition is not: particularly restricted. On the other hand, when the (meth)acrylic resin composition is subjected to thermosetting type injection molding according to the present invention, the spiral flow length is preferably in the range from 400 to 1600 mm. When the spiral flow length is 400 mm or more, thermosetting type injection moldability tends to be improved. When the spiral flow length is 1600 mm or less, the releasing property of the molded article after thermosetting type injection molding tends to be improved. The spiral flow length is more preferred in the range from 500 to 1500 mm, and particularly preferred in the range from 600 to 1000 mm.

The spiral flow length of the (meth)acrylic resin composition can be controlled by the amount compounded of the component (a), the molecular weight and amount compounded of the component (b), the amount compounded of the component (c), and when the component (d) is compounded in the (meth)acrylic resin composition, the amount compounded of the component (d).

The (meth)acrylic resin composition of the present invention is preferably used in the form of a dough-like BMC which is easily handled, and is prepared by mixing the above-described components and further mixing the mixture with a thickening agent for thickening it.

The thickening agent is not particularly restricted. The above-described magnesium oxide may be used, and a part or all of the component (b) may be used as a thickening agent. In view of water resistance of the (meth)acrylic resin molded article, it is preferable to use a part or all of the component (b) as a thickening agent.

When a part or all of the component (b) is used as a thickening agent, the component (b) which is used as a thickening agent is preferably in the form of powder before mixing, and has an average particle size preferably in the range from 1 to 500 µm. When this average particle size is 1 µm or more, the dusting of the powder tends to decrease and the handling of the polymer powder tends to be improved. When this average particle size is 500 µm or less, the appearance (especially gloss and surface smoothness) of the resulted molded article tends to be improved. This average particle size is more preferably in the range from 10 to 400 µm.

The content of the component (b) which is used as a thickening agent is preferably in the range from 0.1 to 20% by weight in the (meth)acrylic resin composition. When this content is 0.1% by weight or more, higher thickening effect tends to be obtained. When this content is 20% by weight or less, the dispersion of components in the (meth)acrylic resin composition tends to be improved.

When a part or all of the component (b) is used as a thickening agent, the polymer powder which is added as a thickening gent is not particularly restricted. However, in particular, it is preferable to use a non-cross-linked polymer powder having a bulk density in the range from 0.1 to 0.7 g/ml, an oil absorption in a linseed oil in the range front 60 to 200 ml/100 g, and a degree of swelling in methyl methacrylate of 16-fold or more. When such a specific polymer powder is used as a thickening agent, a BMC excellent in handling property which does not need aging is obtained and the productivity tends to increase. The specific surface area of this polymer powder is preferably in the range from 1 to 100 m²/g. Further, this polymer powder is preferably a secondary agglomerate which is obtained by agglomeration of a primary particle.

This specific polymer powder can be produced by a known polymerization method such as a solution polymerization method, bulk polymerization method, emulsion polymerization method and suspension polymerization method. Particularly, a method in which an emulsion obtained by emulsion polymerization is spray-dried is preferred since the above-described specific polymer powder can be obtained efficiently.

The (meth)acrylic resin composition of the present invention is not particularly restricted. All components may be mixed at once, or some components may be previously mixed and the resulted mixtures may be finally mixed. For example, regarding the components (a) and (b), the component (b) may be previously dissolved in the component (a). Otherwise, the component (a) may be partially polymerized to generate the component (b) therein which is a polymer of the component (a), and the resultant in the form of syrup may be mixed with other component.

For obtaining the (meth)acrylic resin composition of the present invention, the apparatus for mixing constituents components is not particularly restricted provided it is an apparatus which can efficiently mix substances having high viscosity. For example, a kneader, mixer, roll and extruder can be used.

The method for producing the (meth)acrylic resin composition of the present invention is characterized in that a (meth)acrylic resin composition comprising the (meth)acrylic monomer (a), (meth)acrylic polymer (b) and inorganic filler (c) is subjected to thermosetting type injection molding. The (meth)acrylic resin composition used in this production method is preferably the above-described (meth)acrylic resin composition of the present invention, namely a composition having a spiral flow length in the range from 400 to 1600 mm. However, the production method for the (meth)acrylic resin composition of the present invention is not limited to this. It can be a method in which a composition having a spiral flow length out of the above-described range is used provided it can effect thermosetting type injection molding.

Particularly, the (meth)acrylic resin composition used in this production method is preferably (meth)acrylic BMC. By subjecting the (meth)acrylic BMC to thermosetting type injection molding, input and measurement can be automated, and can remarkably enhance productivity than a compression molding method.

The thermosetting type injection molding machine used for production of the (meth)acrylic resin molded article of the present invention is not particularly restricted. For example, there can be used a thermosetting type injection molding machine for a polyester BMC which is used for molding of an automobile reflector and optical precision member. This thermosetting type injection molding machine has difference in a material feeding part from usual injection molding machine for thermoplastic resins, and this part is constituted of a hopper part, force cylinder part, transport hopper part and the like.

For example, a molding material input in a hopper of a thermosetting type injection molding machine is forced in by a force cylinder, and a given amount of the forced molding material is automatically weighed in an injection barrel by rotation of an injection screw, then, injected via a nozzle into a mold attached to the leading point of the injection molding machine by progressing movement of a screw. This mold has been heated up to the curing temperature of the molding material, and the injected molding material is cured in a mold to obtain a desired molded article.

The curing temperature is not particularly restricted. However, it is preferably in the range from 80 to 160°C. When the curing temperature is 80°C or more, the curing time can be shortened and the productivity tends to increase. When it is not more than 160°C, the appearance of the resulted molded article tends to be improved. This curing temperature is more preferably in the range from 100 to 150°C. The curing time may be appropriately selected depending on the thickness of the molded article.

The following examples further illustrate the present invention specifically. In the examples, all parts and % are by weight.

### 〈Physical property of polymer powder〉

- Average particle size:: It was measured using laser scattering particle size distribution analyzer (LA-910, manufactured by HORIBA Ltd.)
- Bulk density:: It was measured according to JIS R 6126-1970.
- Oil absorption:: It was measured according to JIS K 5101-1991, and time directly before a putty-like lamp is suddenly softened with the last one drop of linseed oil was recognized as terminal point.
- Specific surface area:: It was measured by a nitrogen adsorption method using a surface area meter SA-6201 (manufactured by HORIBA Ltd.).
- Weight average molecular weight:: Measured value by GPC method (in terms of polystyrene) was calculated.
- Degree of swelling:: A polymer powder was charged in a 100 ml measuring cylinder, the cylinder was tapped weakly several times to compact the powder to 5 ml, then, to this was charged methyl methacrylate cooled to 10°C or lower so that the total amount was 100 ml, and the mixture was stirred quickly until the mixture became totally uniform, then, the measuring cylinder was kept in a water bath at 25°C for 1 hour, the volume of the polymer powder layer after swelling was measured, and the degree of swelling was represented by ratio to the volume (5 ml) of the polymer powder layer before swelling.

### 〈Measurement of spiral flow length of (meth)acrylic resin composition〉

First, a mold having a spiral groove shown in Figs. 1 to 4 is provided. This mold is constituted of a upper mold 1 and a lower mold 2. A spiral groove 5 and center part 4 are formed on the lower mold 2, and a charge part 3 is opened in the upper mold 1. The graduation from start point A to R part of the groove in Fig. 1 is described in mm unit. Also, the size of the groove in Fig. 2 is described in mm unit. The size of the mold shown, in Fig. 4 is as follows: longitudinal length (P) = 300 mm, transverse length (Q) = 300 mm, height (R) = 95 mm, height (S) = 285 mm.

60 g of a (meth)acrylic BMC [(meth)acrylic resin composition] which had been previously left in condition sealed in atmosphere of 23°C for 16 hours or more was weighed and charged in the above-described center part 4 of the mold which had been heated at 135°C, and this (meth)acrylic BMC was pressed under a pressure of 10.7 MPa and cured by maintaining for 2 minutes. After curing, the cured material of the (meth)acrylic BMC was took out, and extent of the leading point of the cured material reached certain part in the spiral groove 5 was measured in terms of the distance (mm).

### (1) Production Example of polymer powder (P-1)

Into a reaction apparatus equipped with a cooling tube, thermometer, stirrer, dropping apparatus and nitrogen introducing tube was charged 925 parts of distilled water, 5 parts of sodium alkyldiphenyl ether disulfonate (manufactured by Kao Corp., trade name: Pelex SS-H), and 1 part of potassium persulfate, and the resulting mixture was heated at 70°C with stirring under nitrogen atmosphere. To this was added a mixture of 500 parts of methyl methacrylate and 5 parts of sodium dialkylsulfosuccinate (manufactured by Kao Corp., trade name: Pelex OT-P) dropwise over 3 hours, then, kept for 1 hour, and further heated up to 80°C and kept for 1 hour for completing emulsion polymerization to obtain an emulsion having a primary polymer particle size of 0.08 µm.

The resulted emulsion was spray-dried using spray drier L-8 manufactured by OHKAWARA KAKOHKI Co. Ltd., to obtain a non-cross-linked polymer powder (P-1) having an average particle size of secondary agglomerate particles of 30 µm. The resulted non-cross-linked polymer powder (P-1) was completely dissolved in methyl methacrylate, and had a degree of swelling of 20-fold or more, a bulk density of 0.40 g/ml, an oil absorption in linseed oil of 100 ml/100 g, a specific surface area of 51 m²/g and a weight-average molecular weight of 600,000.

### (2) Production Example of polymer powder (P-2)

A non-cross-linked polymer powder (P-2) having a weight-average molecular weight of 200,000 was obtained according to the same manner as in Production Example (1) except that the charge amount of potassium persulfate was 1.5 parts, and the material was heated up to 80°C with stirring under nitrogen atmosphere and the emulsion polymerization was conducted at 80°C. Other powder properties are shown in Table 1.

### (3) Production Example of polymer powder (P-3)

Into a reaction apparatus equipped with a cooling tube, thermometer, stirrer and nitrogen introducing tube was charged 800 parts of distilled water and 1 part of polyvinyl alcohol (saponification degree: 88%, polymerization degree: 1000), then a monomer solution containing 400 parts of methyl methacrylate, 2 parts of n-dodecymercaptan and 2 parts of azobisisobutyronitrile dissolved was charged, and the resulting mixture was heated up to 80°C over 1 hour with stirring at 400 rpm under nitrogen atmosphere and heated at this temperature for 2 hours. Then, the temperature was raised up to 90°C and the mixture was heated for 2 hours, then, further heated at 120°C for distilling off remaining monomers together with water to obtain slurry, and the suspension polymerization was terminated. The resulted slurry was filtered, and washed, then, dried by a hot air drier at 50°C, to obtain a polymer powder (P-3) having an average particle size of primary particles of 93 µm.

The resulted polymer powder (P-3) had a degree of swelling in methyl methacrylate of 1.2, a bulk density of 0.70 g/ml, an oil absorption in linseed oil of 45 ml/100 g, a specific surface area of 0.07 m²/g and a weight-average molecular weight of 40,000.

### (4) Production Example of polymer powder (P-4)

A polymer powder (P-4) having a weight-average molecular weight of 120,000 was obtained according to the same manner as in Production Example (3) except that the monomer solution to be charged was a solution containing 376 parts of methyl methacrylate, 24 parts of methyl acrylate, 1.2 parts of n-dodecymercaptan and 2 parts of azobisisobutyronitrile, and the stirring rotation was 300 rpm. Other powder properties are shown in Table 1.

### (5) Production Example of polymer powder (P-5)

A polymer powder (P-5) having a weight-average molecular weight of 200,000 was obtained according to the same manner as in Production Example (3) except that the monomer solution to be charged was a solution containing 400 parts of methyl methacrylate, 0.5 part of n-dodecymercaptan and 1 part of azobisisobutyronitrile, the stirring rotation was 300 rpm and the temperature for 2 hours heating was 75°C. Other powder properties are shown in Table 1.

### (6) Production Example of polymer powder (P-6)

A polymer powder (P-6) having a weight-average molecular weight of 300,000 was obtained according to the same manner as in Production Example (3) except that the monomer solution to be charged was a solution containing 400 parts of methyl methacrylate, 0.3 part of n-dodecymercaptan and 2 parts of azobisisobutyronitrile, and the temperature for 2 hours heating was 70°C. Other powder properties are shown in Table 1.

### (7) Production Example of polymer powder (P-7)

A polymer powder (P-1) having a weight-average molecular weight of 500,000 was obtained according to the sane manner as in Production Example (3) except that the monomer solution to be charged was a solution containing 400 parts of methyl methacrylate, 0.1 part of n-dodecymercaptan and 0.4 part of azobisisobutyronitrile, the stirring rotation was 300 rpm and the temperature for 2 hours heating was 70°C. Other powder properties are shown in Table 1.

### (8) Production Example of polymer powder (P-8)

A polymer powder (P-8) having a weight-average molecular weight of 1,200,000 was obtained according to the same manner as in Production Example (3) except that the monomer solution to be charged was a solution containing 400 parts of methyl methacrylate and 0.5 part of azobisisobutyronitrile and the stirring rotation was 300 rpm. Other powder properties are shown in Table 1.

### (9) Production Example of inorganic filler-containing resin particle (d)

To 100 parts of a mixture composed of 69% of methyl methacrylate, 2% of ethylene glycol dimethacrylate and 29% of the polymer powder (P-3) obtained in the above-described Production Example (3) was added 2.0 parts of t-butyl peroxy benzoate (manufactured by NOF Corp. trade name: Perbutyl Z) as a curing agent, 0.5 part of zinc stearate as an internal releasing agent and 0.25 part of a white inorganic pigment or black inorganic pigment, then, to this mixture was added 200 parts of aluminum hydroxide (manufactured by Showa Denko K.K., trade name: Higilite H-310, average particle size: 15 µm) as an inorganic tiller and further was added 30 parts of the polymer powder (P-1) obtained in the above-described Production Example (1), and the resulting mixture was kneaded by a kneader for 10 minutes to obtain a (meth)acrylic BMC.

Then, this (meth)acrylic BMC was filled in a flat type mold for molding of 200 mm square, and cured with being heated and pressurized at a mold temperature of 130°C and a pressure of 98 MPa for 10 minutes for press-molding, to obtain a (meth)acrylic artificial marble having a thickness of 10 mm. The resulted (meth)acrylic artificial marble was broken by a crusher to obtain a white or black inorganic filler-containing resin particle (d) having an average particle size of 350 µm.

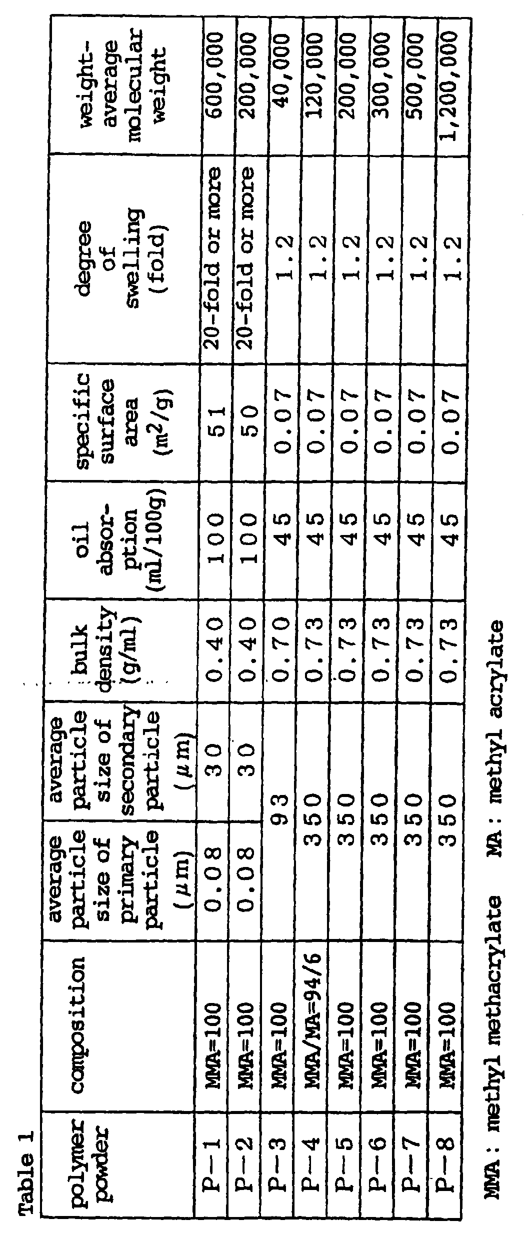

### [Example 1]

Into a component (a) comprising 58 parts of methyl methacrylate, 15 parts of neopentyl glycol dimethacrylate and 2 parts of ethylene glycol dimethacrylate was dissolved 25 parts of the polymer powder (P-3) obtained in the above-described Production Example (3) as a component (b), to obtain a mixture of the components (a) and (b). To 100 parts of this mixture was added 3 parts of 1,1-bis(t-butyl peroxy)3,3,5-trimethylcyclohexane (manufactured by NOF Corp., trade mark: Perhexa 3M) as a curing agent, 0.5 part of zinc stearate as an internal releasing agent and 220 parts of aluminum hydroxide having an average particle size of 50 µm (manufactured by Nippon Light Metal Co., Ltd., trade name: BW 53) as an inorganic filler (c) and further was added 20 parts of the polymer powder (P-1) which is the component (b) obtained in the above-described Production Example (1) as a thickening agent, and the resulting mixture was kneaded by a kneader for 10 minutes to obtain a (meth)acrylic BMC.

The resulted (meth)acrylic BMC exhibited no stickiness even directly after the kneading and revealed extremely excellent handling property, and required no aging. This BMC had a spiral flow length of 1100 mm.

The resulted (meth)acrylic BMC was input into a material input hopper of a thermosetting type injection molding machine (JP-200SA manufactured by The Japan Steel Works Ltd.) controlled at a barrel temperature of 10 to 20°C and a nozzle temperature of 25 to 30°C, and automatically weighed under conditions of a forcing pressure of 2.9 MPa (gauge pressure) and a back pressure of 1.0 to 2.0 MPa (gauge pressure) until the retreat distance of the screw reached 160 mm. Then, the weighed (meth)acrylic BMC was injected into a mold for a speaker box controlled at given temperature (fixing side mold temperature: 140 to 145°C, moving side mold temperature: 120 to 125°C), at an injection gauge pressure of 6.9 to 13.7 MPa (injection pressure applied on the molded article was 69 to 101 MPa) and an injection speed at digital setting of 95% (2 to 10 seconds), and kept for 120 seconds to be cured, to obtain a (meth)acrylic speaker box molded article as a box having a longitudinal length of 150 mm, transverse length of 100 mm, depth of 120 mm and a thickness of 5 mm.

The resulted molded article had marble-like appearance having gloss and deep feeling (transparency), and was a speaker box having excellent design, and had excellent appearance without pinhole, unevenness in gloss, nesting, dimples and whitening. Further, this molded article had excellent mechanical strength, dimension stability and damping property.

### [Example 2]

A (meth)acrylic speaker baffle plate in the form of a plate having a longitudinal length of 150 mm, transverse length of 100 mm and a thickness of 5 mm was obtained in the same manner as in Example 1 except that the mold was substituted by a mold for a speaker baffle plate, the retreat distance of the screw was changed to 50 mm and the moving side mold temperature was changed to 130 to 135°C.

The resulted speaker baffle plate had marble-like appearance having gloss and deep feeling (transparency), had excellent design, and had excellent appearance without pinhole, unevenness in gloss, nesting, dimples and whitening. Further, this molded article had excellent strength, dimension stability and damping property.

### [Example 3]

Into a component (a) comprising 48 parts of methyl methacrylate, 25 parts of neopentyl glycol dimethacrylate and 2 parts of ethylene glycol dimethacrylate was dissolved 25 parts of the polymer powder (P-3) obtained in the above-described Production Example (3) as a component (b), to obtain a mixture of the components (a) and (b). To 100 parts of this mixture was added 3 parts of 1,1-bis(t-butyl peroxy)3,3,5-trimethylcyclohexane as a curing agent, 0.5 part of zinc stearate as an internal releasing agent and 160 parts of aluminum hydroxide having an average particle size of 50 µm as an inorganic filler (c), further was added 100 parts of the inorganic filler-containing resin particles composed of the black particle and white particle in total obtained in the above-described Production Example (9) as a component (d), and further added 10 parts of the polymer powder (P-1) which is the component (b) obtained in the above-described Production Example (1) as a thickening agent, and the resulting mixture was kneaded by a kneader for 10 minutes to obtain a (meth)acrylic BMC.

The resulted (meth)acrylic BMC exhibited no stickiness even directly after the kneading and revealed extremely excellent handling property, and required no aging. This BMC had a spiral flow length of 500 mm.

Then this resulted (meth)acrylic BMC was processed in the same manner as in Example 1 (except that the injection gauge pressure was 9.8 to 13.7 MPa; injection pressure applied on the molded article was 72 to 101 MPa), to obtain a granite-like (meth)acrylic speaker box molded article.

### [Example 4]

The (meth)acrylic BMC obtained in Example 3 was processed in the same manner as in Example 2 (except that the injection gauge pressure was 9.8 to 13.7 MPa; injection pressure applied on the molded article was 72 to 101 MPa), to obtain a granite-like (meth)acrylic speaker baffle plate.

### [Example 5]

A (meth)acrylic BMC was obtained in the same manner as in Example 3 except that the mixture of the components (a) and (b) was composed of 48 parts of methyl methacrylate, 15 parts of cyclohexyl methacrylate, 10 parts of neopentyl glycol dimethacrylate, 2 parts of ethylene glycol dimethacrylate and 25 parts of the polymer powder (P-3).

The resulted (meth)acrylic BMC exhibited no stickiness even directly after the kneading and revealed extremely excellent handling property, and required no aging. This BMC had a spiral flow length of 500 mm.

Then this resulted (meth)acrylic BMC was processed in the same mariner as in Example 3, to obtain a granite-like (meth)acrylic speaker box molded article.

### [Example 6]

The (meth)acrylic BMC obtained in Example 5 was processed in the same manner as in Example 4, to obtain a granite-like (meth)acrylic speaker baffle plate.

### [Example 7]

A (meth)acrylic BMC was obtained in the same manner as in Example 3 except that the amount of the inorganic filler (c) was 125 parts and the amount of the inorganic filler-containing resin particle was 85 parts. The resulted (meth)acrylic BMC exhibited no stickiness, even directly after the kneading and revealed extremely excellent handling property, and required no aging. This BMC had a spiral flow length of 800 mm.

Then this resulted (meth)acrylic BMC was processed in the same manner as in Example 1, to obtain a granite-like (meth)acrylic speaker box molded article.

### [Example 8]

The (meth)acrylic BMC obtained in Example 7 was processed in the same manner as in Example 2, to obtain a granite-like (meth)acrylic speaker baffle plate.

### [Example 9]

A (meth)acrylic BMC was obtained in the same manner as in Example 3 except that the mount of the inorganic filler-containing resin particle (d) was 75 parts, and 35 parts of the polymer powder (P-4) obtained in the above-described Production Example (4) was used as a thickening agent. The resulted (meth)acrylic BMC was aged at 40°C for 24 hours. The (meth)acrylic BMC resulted after aging exhibited no stickiness and revealed extremely excellent handling property. This BMC had a spiral flow length of 600 mm.

Then this resulted (meth)acrylic BMC was processed in the same manner as in Example 1, to obtain a granite-like (meth)acrylic speaker box molded article.

### [Example 10]

The (meth)acrylic BMC obtained in Example 9 was processed in the same manner as in Example 2, to obtain a granite-like (meth)acrylic speaker baffle plate.

### [Example 11]

A (meth)acrylic BMC was obtained in the same manner as in Example 3 except that the amount of the inorganic filler (c) was 150 parts, the amount of the inorganic filler-containing resin particle (d) was 70 parts, and 30 parts of the polymer powder (p-2) obtained in the above-described Production Example (2) was used as a thickening agent. The resulted (meth)acrylic BMC exhibited no stickiness even directly after the kneading and revealed extremely excellent handling property, and required no aging. This BMC had a spiral flow length of 620 mm.

Then this resulted (meth)acrylic BMC was processed in the same manner as in Example 1, to obtain a granite-like (meth)acrylic speaker box molded article.

### [Example 12]

The (meth)acrylic BMC obtained in Example 11 was processed in the same manner as in Example 2, to obtain a granite-like (meth)acrylic speaker baffle plate.

### [Example 13]

A (meth)acrylic BMC was kneaded and aged in the same manner as in Example 9 except that the polymer powder (P-3) obtained in the above-described Production Example (3) was used as a thickening agent. The (meth)acrylic BMC resulted after aging exhibited no stickiness and revealed excellent handling property. This BMC had a spiral flow length of 840 mm.

Then this resulted (meth)acrylic BMC was processed in the same manner as in Example 1, to obtain a granite-like (meth)acrylic speaker box molded article.

### [Example 14]

The (meth)acrylic BMC obtained in Example 13 was processed in the same manner as in Example 2, to obtain a granite-like (meth)acrylic speaker baffle plate.

### [Example 15]

A (meth)acrylic BMC was kneaded and aged in the same manner as in Example 9 except that the polymer powder (P-5) obtained in the above-described Production Example (5) was used as a thickening agent. The (meth)acrylic BMC resulted after aging exhibited no stickiness and revealed excellent handling property. This BMC had a spiral flow length of 640 mm.

Then this resulted (meth)acrylic BMC was processed in the same mariner as in Example 1, to obtain a granite-like (meth)acrylic speaker box molded article.

### [Example 16]

The (meth)acrylic BMC obtained in Example 15 was processed in the same manner as in Example 2, to obtain a granite-like (meth)acrylic speaker baffle plate.

### [Example 17]

A (meth)acrylic BMC was kneaded and aged in the same manner as in Example 9 except that the amount of the inorganic filler-containing resin particle (d) was 70 parts, and 20 parts of the polymer powder (P-6) obtained in the above-described Production Example (6) was used as a thickening agent. The (meth)acrylic BMC resulted after aging exhibited no stickiness and revealed excellent handling property. This BMC had a spiral flow length of 650 mm.

Then this resulted (meth)acrylic BMC was processed in the same manner as in Example 1, to obtain a granite-like (meth)acrylic speaker box molded article.

### [Example 18]

The (meth)acrylic BMC obtained in Example 17 was processed in the same manner as in Example 2, to obtain a granite-like (meth)acrylic speaker baffle plate.

### [Example 19]

A (meth)acrylic BMC was kneaded and aged in the same manner as in Example 9 except that the amount of the inorganic filler (c) was 135 parts, the amount of the inorganic filler-containing resin particle (d) was 65 parts, and 17 parts of the polymer powder (P-7) obtained in the above-described Production Example (7) was used as a thickening agent. The (meth)acrylic BMC resulted after aging exhibited no stickiness and revealed excellent handling property. This BMC had a spiral flow length of 610 mm.

Then this resulted (meth)acrylic BMC was processed in the same manner as in Example 1, to obtain a granite-like (meth)acrylic speaker box molded article.

### [Example 20]

The (meth)acrylic BMC obtained in Example 19 was processed in the same manner as in Example 2, to obtain a granite-like (meth)acrylic speaker baffle plate.

### [Example 21]

A (meth)acrylic BMC was kneaded and aged in the same manner as in Example 9 except that aluminum hydroxide having an average particle size of 8 µm (manufactured by Sumitomo Chemical Co., Ltd., trade name: CW-308) was used as the inorganic filler (c). The (meth)acrylic BMC resulted after aging exhibited no stickiness and revealed excellent handling property. This BMC had a spiral flow length of 660 mm.

Then this resulted (meth)acrylic BMC was processed in the same manner as in Example 1, to obtain a granite-like (meth)acrylic speaker box molded article.

### [Example 22]

The (meth)acrylic BMC obtained in Example 21 was processed in the same manner as in Example 2, to obtain a granite-like (meth)acrylic speaker baffle plate.

### [Example 23]

A (meth)acrylic BMC was kneaded and aged in the same manner as in Example 9 except that aluminum hydroxide having an average particle size of 15 µm (manufactured by Showa Denko K.K., trade name: Higilite H-310) was used as the inorganic filler (C). The (meth)acrylic BMC resulted after aging exhibited no stickiness and revealed excellent handling property. This BMC had a spiral flow length of 650 mm.

Then this resulted (meth)acrylic BMC was processed in the same manner as in Example 1, to obtain a granite-like (meth)acrylic speaker box molded article.

### [Example 24]

The (meth)acrylic BMC obtained in Example 23 was processed in the same manner as in Example 2, to obtain a granite-like (meth)acrylic speaker baffle plate.

### [Example 25]

A (meth)acrylic BMC was kneaded and aged in the same manner as in Example 9 except that aluminum hydroxide having an average particle size of 25 µm (manufactured by Sumitomo Chemical Co., Ltd., trade name: CW-325LV) was used as the inorganic filler (c). The (meth)acrylic BMC resulted after aging exhibited no stickiness and revealed excellent handling property. This BMC had a spiral flow length of 640 mm.

Then this resulted (meth)acrylic BMC was processed in the same manner as in Example 1, to obtain a granite-like (meth)acrylic speaker box molded article.

### [Example 26]

The (meth)acrylic BMC obtained in Example 25 was processed in the same manner as in Example 2, to obtain a granite-like (meth)acrylic speaker baffle plate.

### [Example 27]

A (meth)acrylic BMC was kneaded and aged in the same manner as in Example 9 except that aluminum hydroxide having an average particle size of 75 µm (manufactured by Sumitomo Chemical Co., Ltd., trade name: CW-375HT) was used as the inorganic filler (c). The (meth)acrylic BMC resulted after aging exhibited no stickiness and revealed excellent handling property. This BMC had a spiral flow length of 550 mm.

Then this resulted (meth)acrylic BMC was processed in the same manner as in Example 3, to obtain a granite-like (meth)acrylic speaker box molded article.

### [Example 28]

The (meth)acrylic BMC obtained in Example 27 was processed in the same manner as in Example 4, to obtain a granitelike (meth)acrylic speaker baffle plate.

### [Example 29]

A (meth)acrylic BMC was obtained in the same manner as in Example 1 except that the amount of the inorganic filler (c) was 240 parts and the amount of the polymer powder (P-1) was 50 parts. The resulted (meth)acrylic BMC exhibited no stickiness even directly after kneading and revealed extremely excellent handling property, and required no aging. This BMC had a spiral flow length of 280 mm.

Then this resulted (meth)acrylic BMC was processed in the same manner as in Example 1 (except that the injection gauge pressure was 13.7 MPa; injection pressure applied on the molded article was 101 MPa), to obtain a marble-like (meth)acrylic speaker box molded article.

### [Example 30]

The (meth)acrylic BMC obtained in Example 29 was processed In the same manner as in Example 2 (except that the injection gauge pressure was 13.7 MPa; injection pressure applied on the molded article was 101 MPa), to obtain a marble-like (meth)acrylic speaker baffle plate.

### [Example 31]

A (meth)acrylic BMC was obtained in the same manner as in Example 3 except that the amount of the inorganic filler (c) was 145 parts and the amount of the inorganic filler-containing resin particle (d) was 70 parts, and the amount of the thickening agent was 35 parts. The resulted (meth)acrylic BMC exhibited no stickiness even directly after kneading and revealed extremely excellent handling property, and required no aging. This BMC had a spiral flow length of 260 mm.

Then this resulted (meth)acrylic BMC was processed in the same manner as in Example 29 to obtain a granite-like (meth)acrylic speaker box molded article.

### [Example 32]

The (meth)acrylic BMC obtained in Example 31 was processed in the same manner as in Example 30 to obtain a granite-like (meth)acrylic speaker baffle plate.

### [Example 33]

A (meth)acrylic BMC was kneaded and aged in the same manner as in Example 9 except that the amount of the inorganic filler (c) was 140 parts, the amount of the inorganic filler-containing resin particle (d) was 100 parts, and 30 parts of the polymer powder (P-8) obtained in the above-described Production Example (8) was used as a thickening agent. The (meth)acrylic BMC resulted after the kneading exhibited no stickiness and revealed excellent handling property. This BMC had a spiral flow length of 330 mm.

Then this resulted (meth)acrylic BMC was processed in the same manner as in Example 1 (except that the injection gauge pressure was 11.8 to 13.7 MPa; injection pressure applied on the molded article was 80 to 101 mPa), to obtain a granite-like (meth)acrylic speaker baffle plate.

### [Example 34]

The (meth)acrylic BMC obtained in Example 33 was processed in the same manner as in Example 2 (except that the injection gauge pressure was 11.8 to 13.7 MPa; injection pressure applied on the molded article was 80 to 101 MPa), to obtain a granite-like (meth)acrylic speaker baffle plate.

### [Example 35]

A (meth)acrylic BMC was kneaded and aged in the same manner as in Example 9 except that the mixture of the components (a) and (b) was composed of 73 parts of methyl methacrylate, 10 parts of neopentyl glycol dimethacrylate, 2 parts of ethylene glycol dimethacrylate and 15 parts of the polymer powder (P-3), the amount of the inorganic filler (c) was 150 parts, the amount of the inorganic filler-containing resin particle (d) was 65 parts, and the amount of the polymer powder (P-4) was 30 parts. This (meth)acrylic BMC had a spiral flow length of 1650 mm or more.

Then this resulted (meth)acrylic BMC was processed in the same manner as in Example 1 to obtain a granite-like (meth)acrylic speaker box molded article.

### [Example 36]

The (meth)acrylic BMC obtained in Example 35 was processed in the same manner as in Example 2 to obtain a granite-like (meth)acrylic speaker baffle plate molded article.

### [Example 37]

A (meth)acrylic BMC was obtained in the same manner as in Example 1 except that 160 parts of aluminum hydroxide having an average particle size of 15 µm (manufactured by Showa Denko K.K., trade name: Higilite H-310) was used as the inorganic filler (c) and 10 parts of the polymer powder (P-1) was used as a thickening agent. This (meth)acrylic BMC had a spiral flow length of 1650 mm or more.

Then this resulted (meth)acrylic BMC was processed in the same manner as in Example 1, to obtain a marble-like (meth)acrylic speaker box molded article.

### [Example 38]

The (meth)acrylic BMC obtained in Example 37 was processed in the same manner as in Example 2, to obtain a marble-like (meth)acrylic speaker baffle plate molded article.

The details of the compositions of the (meth) acrylic resin compositions in the Examples 1 to 38 are shown in Table 2, and the moldability of the compositions and the evaluation results of the molded articles are shown in Table 3.

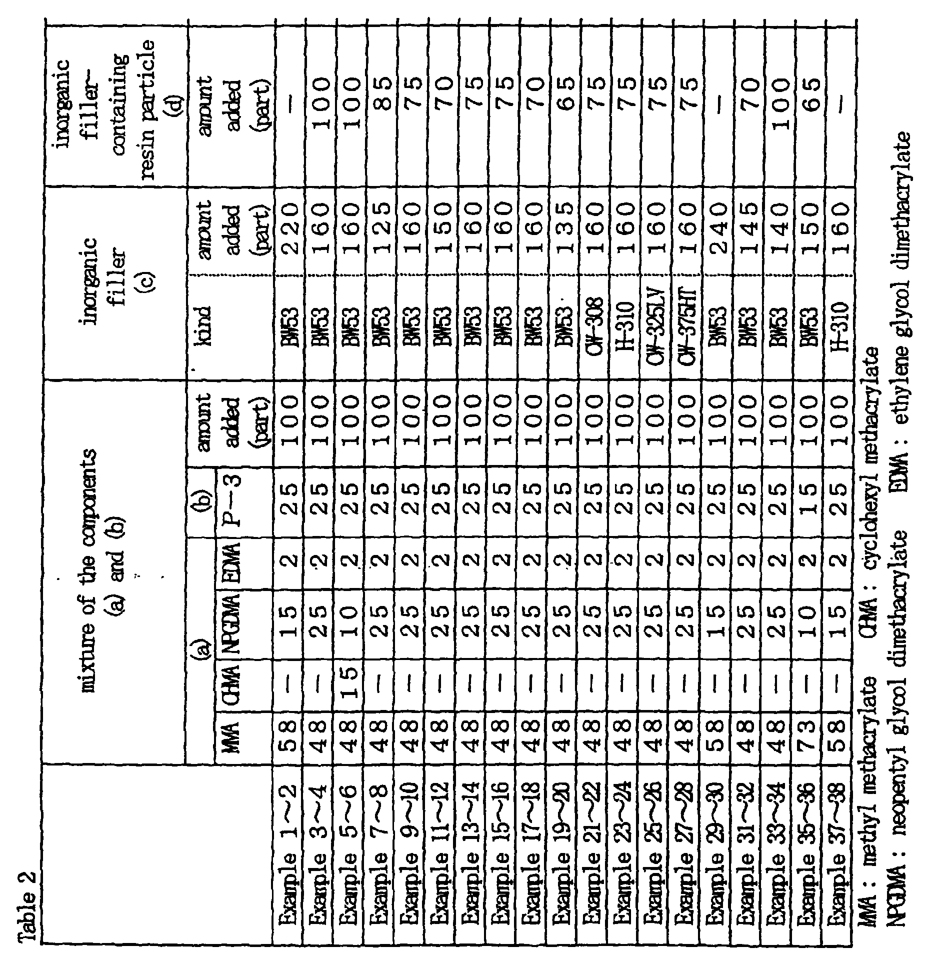

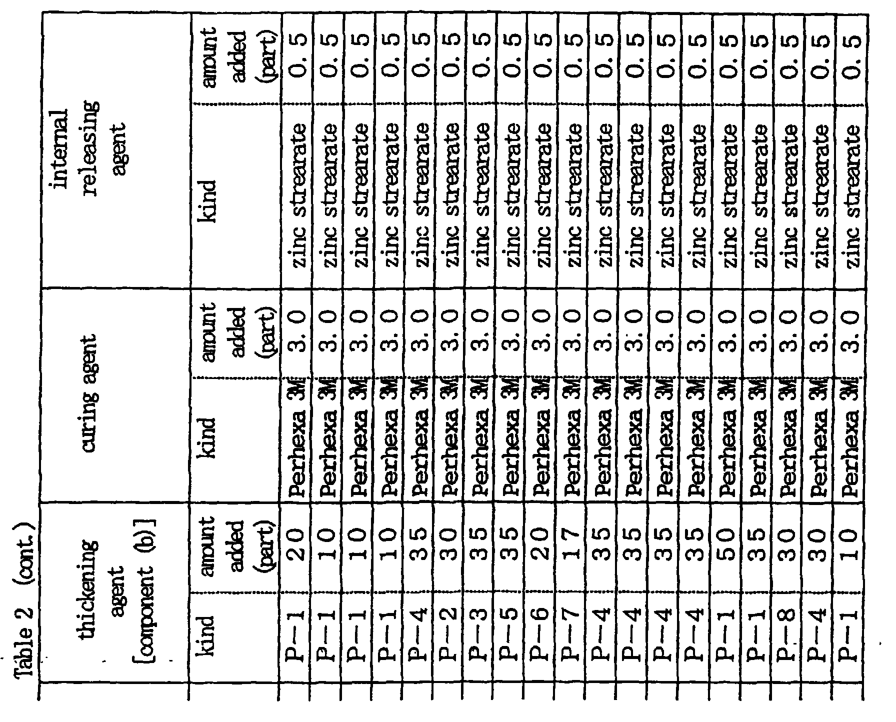

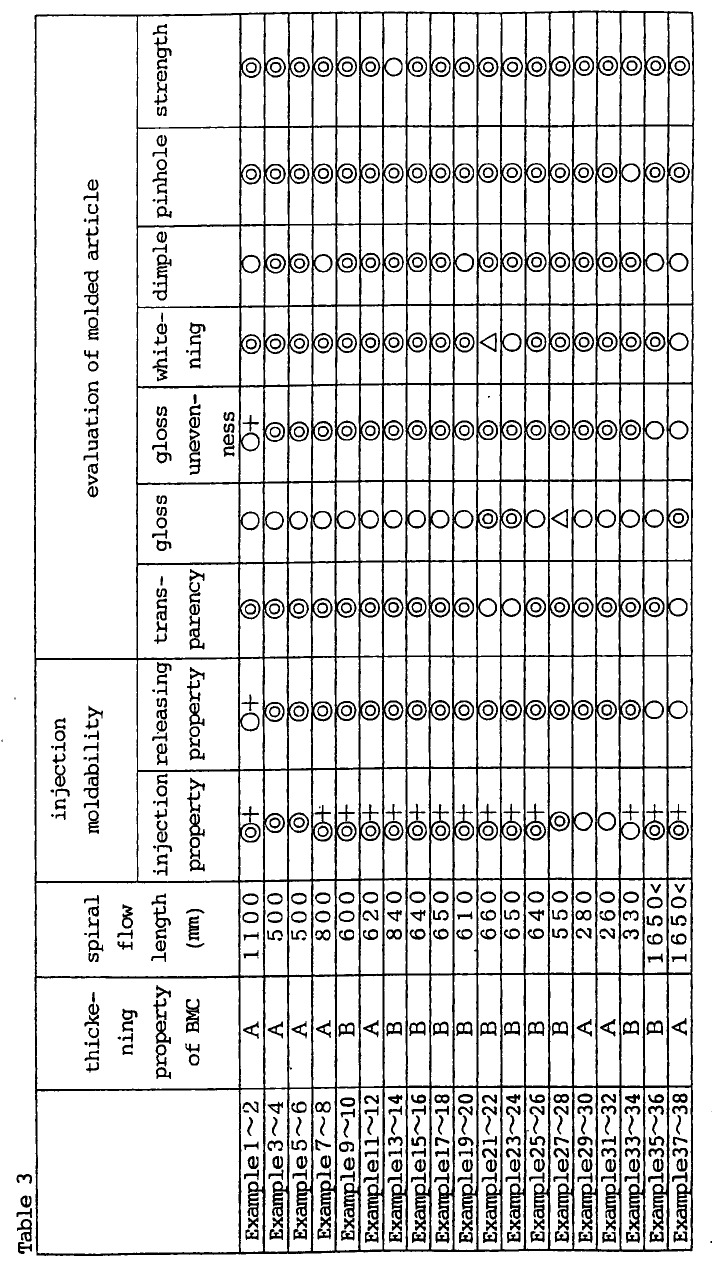

The marks in the evaluation results shown in Table 3 are according to the following standards.

### 〈Thickening property of BMC〉

- A:: A dough-like material having no stickiness is obtained even directly after kneading, and handling property is extremely excellent, and aging is not required.
- B:: When it is aged at 40°C for 24 hours after kneading, a dough-like material having excellent handling property is obtained.

### 〈Injection property〉

- ⓞ+:: Within the injection gauge pressure range from 6.9 to 13.7 MPa (injection pressure applied on the molded article is 69 to 101 MPa), injection molding is possible, working conditions are very wide, and injection moldability is extremely excellent.
- ⓞ:: Within the injection gauge pressure range from 9.8 to 13.7 MPa (injection pressure applied on the molded article is 72 to 101 MPa), injection molding is possible, working conditions are wide. Injection moldability is excellent.
- ○+:: Within the injection gauge pressure range from 11.8 to 13.7 MPa (injection pressure applied on the molded article is 80 to 101 MPa), injection molding is possible, however, working conditions are somewhat narrow.
- ○:: When the injection gauge pressure is set at 13.7 MPa which is the maximum value of the apparatus (injection pressure applied on the molded article is 101 MPa), injection molding is possible, however, working conditions are narrow.

### 〈Releasing property of molded article〉

- ⓞ:: Releasing property is extremely excellent.
- ○+:: Releasing property is excellent.
- ○:: (Meth)acrylic resin composition enters slightly into clearance of ejector pin, and moving property of the ejector pin is relatively slow, however, releasing is possible.

### 〈Transparency of molded article〉

- ⓞ:: Transparency is extremely high.
- ○:: Transparency is high.

### 〈Gloss of molded article〉

- ⓞ:: Gloss is extremely high.
- ○:: Gloss is high.
- △:: Gloss is low, but there is practically no problem.

### 〈Unevenness in gloss of molded article〉

- ⓞ:: There is no unevenness in gloss at all, and gloss is uniform over the whole surface of molded article.
- ○+:: There is almost no unevenness in gloss.
- ○:: There is a little unevenness in gloss, however, practically no problem.

### 〈Whitening of molded article〉

- ⓞ:: There in no whitening at all.
- ○:: There is almost no whitening.
- △:: There is a little whitening due to flow unevenness of BMC material, however, practically no problem.

### 〈Dimple on molded article〉

- ⓞ:: There is no dimple at all due to curing and shrinkage of BMC material.
- ○:: There is almost no dimple due to curing and shrinkage of BMC material.

### 〈Pinhole on molded article〉

- ⓞ:: There is no pinhole at all due to remaining thickening agent which has not been dissolved.
- ○:: There is almost no pinhole due to remaining thickening agent which has not been dissolved.

### 〈Strength of molded article〉

- ⓞ:: Mechanical strength is excellent, and problems such as crack and break do not occur during transportation of molded article.
- ○:: Mechanical strength is somewhat low, however, there is not practical problem.

## Claims

1. A (meth)acrylic resin composition for thermosetting type injection molding comprising a (meth)acrylic monomer (a), (meth)acrylic polymer (b) and inorganic filler (c), wherein the spiral flow length is in the range from 400 to 1600 mm.

2. The (meth)acrylic resin composition according to Claim 1 further comprising an inorganic filler-containing resin particle (d).

3. The (meth)acrylic resin composition according to Claim 1 comprising 5 to 50% by weight of the (meth)acrylic monomer (a), 1 to 30% by weight of the (meth)acrylic polymer (b) and 20 to 80% by weight of the inorganic filler (c).

4. The (meth)acrylic resin composition according to Claim 2 comprising 5 to 50% by weight of the (meth)acrylic monomer (a), 1 to 30% by weight of the (meth)acrylic polymer (b), 20 to 70% by weight of the inorganic filler (c) and 1 to 50% by weight of the inorganic filler-containing resin particle (d).

5. The (meth)acrylic resin composition according to Claim 1 or 2 comprising 1 to 20% by weight of methyl methacrylate as the (meth)acrylic monomer (a).

6. The (meth)acrylic resin composition according to Claim 1 or 2 comprising 5 to 30% by weight of a (meth)acrylic polymer having a weight average molecular weight of not less than 20,000 and less than 50,000 as the (meth)acrylic polymer (b).

7. The (meth)acrylic resin composition according to Claim 1 or 2 comprising 2 to 20% by weight of a (meth)acrylic polymer having a weight average molecular weight of not less than 50,000 and not more than 400,000 as the (meth)acrylic polymer (b).

8. The (meth)acrylic resin composition according to Claim 1 or 2 comprising 1 to 15% by weight of a (meth)acrylic polymer having a weight average molecular weight of more than 400,000 and not more than 2,000,000 as the (meth)acrylic polymer (b).

9. The (meth)acrylic resin composition according to Claim 1 or 2, wherein the average particle size of the inorganic filler (c) is not less than 1 µm and less than 20 µm.

10. The (meth)acrylic resin composition according to Claim 1 or 2, wherein the average particle size of the inorganic filler (c) is not less than 20 µm and not more than 60 µm.

11. The (meth)acrylic resin composition according to Claim 1 or 2, wherein the average particle size of the inorganic filler (c) is more than 60 µm and not more than 90 µm.

12. The (meth)acrylic resin composition according to Claim 1 or 2, which is a (meth)acrylic BMC.

13. A method for producing the (meth)acrylic resin composition of Claim 12, wherein a part or all of the (meth)acrylic polymer (b) is used as a thickening agent.

14. A method for producing a (meth)acrylic resin molded article, wherein a (meth)acrylic resin composition comprising a (meth)acrylic monomer (a), a (meth)acrylic polymer (b) and an inorganic filler (c) is subjected to thermosetting type injection molding.
